# EUROPEAN PATENT APPLICATION

(11) **EP 2 568 491 A1**
(43) Date of publication of application: **13.03.2013**
(21) Application number: 12183465.9
(22) Date of filing: 07.09.2012
(51) Int. Cl.: H01H 13/06, G04B 37/10

(54) **Water-proof apparatus and method for water-proofing**

(30) Priority: 09.09.2011 KR 20110092110
(71) Applicant: Pantech Co., Ltd., Seoul 121-792 (KR)
(72) Inventor: Kang, Sang Kyun, 121-792 Seoul (KR)
(74) Representative: Herzog, Markus

(57) **Abstract**

A terminal, includes: a first button exposed on an exterior of the terminal; an elastic body comprising a coupling hole, the elastic body arranged in a case of the terminal; a rod fitted in the coupling hole, and the rod to be engaged by pressure asserted on the first button, wherein if force is asserted on the first button, the elastic body activates a push switch of the terminal. A method for providing water-proofing for a terminal, includes: providing a first button exposed on an exterior of the terminal; providing a non-metal insert comprising a coupling hole, the non-metal insert being fitted in a case of the terminal; and fitting a rod in the coupling hole, the rod being engaged by pressure asserted on the first button, wherein if force is asserted on the first button, the non-metal insert activates a push switch of the terminal.

## Description

### BACKGROUND

FIELD

The present disclosure relates to a water-proof apparatus and method for water-proofing.

DISCUSSION OF THE BACKGROUND

In electronic apparatuses, such as a portable terminal, a water-proofing structure may be introduced to reduce the risk of malfunction of circuits inside the electronic apparatus due to water that may seep into a gap of a device, such as a gap located near or caused by the button area.

As used in this disclosure, "water-proofing" may refer to water resistance, or improving a device or structures resistance to damage caused by incidental water contact, or water-proofing according to an industry or commercial standard.

FIG. 1 is a perspective view illustrating a water-proof structure of a push button according to the prior art.

FIG. 2 is a cross-sectional view illustrating a water-proof structure of a push button according to the prior art.

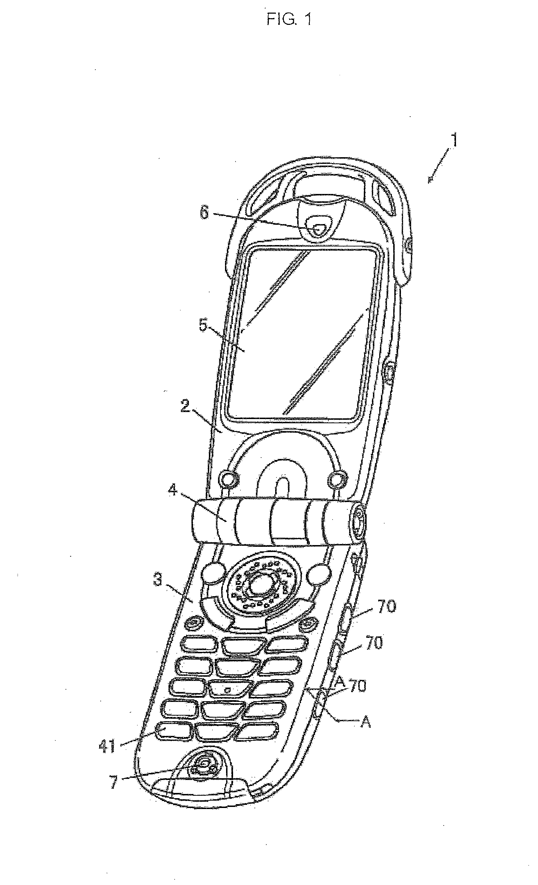

Referring to FIG. 1, a mobile terminal 1 includes a push button 70 on the side of the mobile terminal. This structure may be designed to be water-proof.

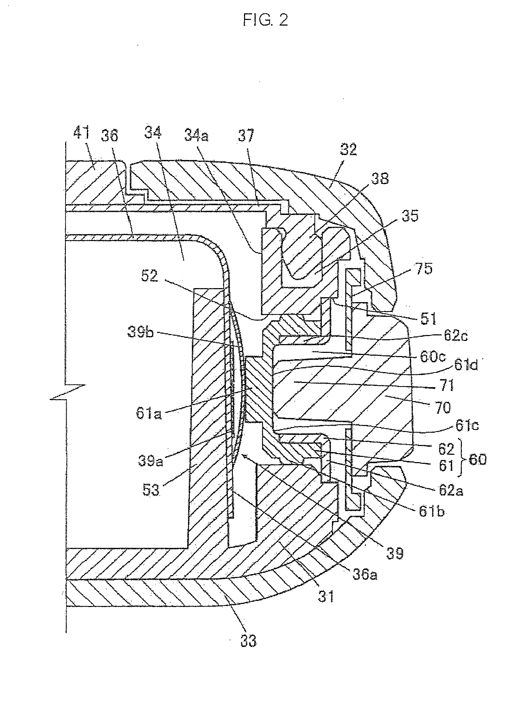

Referring FIG. 2, the water-proof structure includes a cup member 61, a silicon rubber elastic body, and a packing member 60, a metallic cylindrical holder 62 holding the cup member 61, where a protrusion 71 of a lower portion of a push button 70 is inserted into an opening 60c of the cup member 61.

In the above-described structure, the push button 70 and the protrusion 71 may be integral with each other, and the cup member 61, which may provide water-proofing, is installed between the protrusion and a dome switch 39, allowing for a click action. A protrusion 61b of the cup member 61 is brought into press-contact with a penetration hole 52, thereby providing water-proofing performance.

In order to maintain the press-contact force between the packing member 60 and an inner case 32, a support force pushing the packing member 60 toward the inner case 32 is needed. If the push button 70 and the protrusion 71 are firmly interposed in the cup member 61 so as to generate a support force, a repelling force is generated against the lateral movement of the push button 70, so that the click sensation is degraded noticeably. Therefore, a hollow cylindrical metal substance is insert-molded on the top portion of the cup member 61 so that the cylindrical holder 62 is coupled thereto, and thus, the click sensation of the push button 70 may be maintained while the support force is generated.

However, if the metal substance is insert-molded with the elastic body, a technique may be employed to prevent leakage at the molding coupling face between two different materials. The introduction of this technique may increase manufacturing costs. Further, since the push button 70 is coupled from the side surface of the case due to the protrusion 71 of the push button 70, which is inserted into the elastic body, a flange may be installed at only one side surface of the push button 70 so as to prevent the gap of the push button 70 from being seen from the outside of a portable terminal and prevent the push button 70 from protruding outward from the case. Accordingly, since the position for the placement or assembly of the push button 70 in the case is restricted, there is a disadvantage in that the design may be limited due to the location of the push button 70.

The above information disclosed in this Background section is only for enhancement of understanding of the background of the invention and therefore it may contain information that does not form any part of the prior art.

### SUMMARY

Exemplary embodiments of the present invention provide a water-proof apparatus and a method for water-proofing, and more specifically a structure with a first button that activates a rod that applies pressure to an elastic body.

Additional features of the invention will be set forth in the description which follows, and in part will be apparent from the description, or may be learned by practice of the invention.

An exemplary embodiment of the present invention discloses a terminal, including: a first button exposed on an exterior of the terminal; an elastic body comprising a coupling hole, the elastic body arranged in a case of the terminal; a rod fitted in the coupling hole, and the rod to be engaged by pressure asserted on the first button, wherein if force is asserted on the first button, the elastic body activates a push switch of the terminal.

An exemplary embodiment of the present invention discloses an elastic body inserted in a case of a terminal, including: a coupling hole disposed in the elastic body; a rod fitted in the coupling hole, and the rod to be engaged by pressure asserted on a first button, wherein if force is asserted on the first button, the elastic body activates a push switch of the terminal.

An exemplary embodiment of the present invention discloses a method for providing water-proofing for a terminal, comprising: providing a first button exposed on an exterior of the terminal; providing a non-metal insert comprising a coupling hole, the non-metal insert being fitted in a case of the terminal; and fitting a rod in the coupling hole, the rod being engaged by pressure asserted on the first button, wherein if force is asserted on the first button, the non-metal insert activates a push switch of the terminal.

It is to be understood that both the forgoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 is a perspective view illustrating a water-proof structure of a push button according to the prior art.

FIG. 2 is a cross-sectional view illustrating a water-proof structure of a push button according to the prior art.

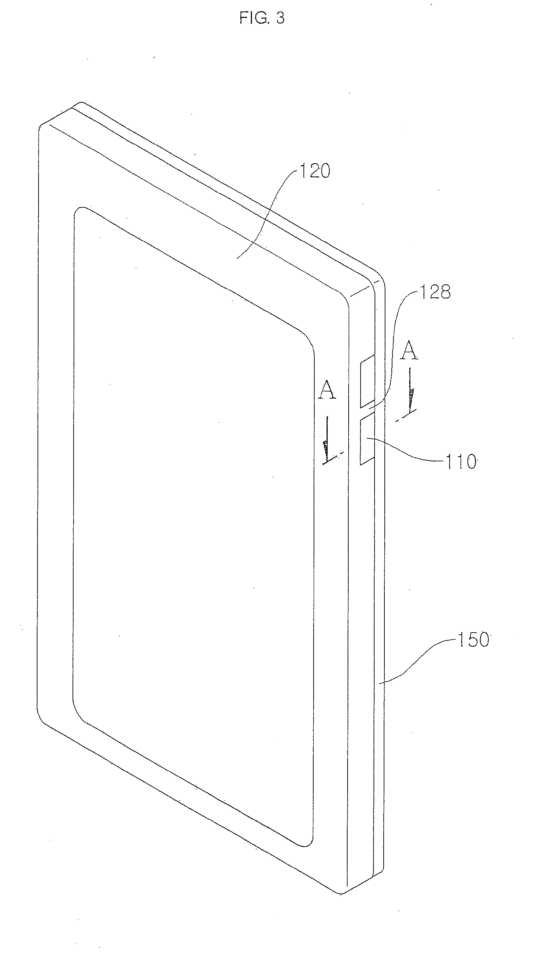

FIG. 3 is a perspective view illustrating a water-proof structure according to an exemplary embodiment of the present invention.

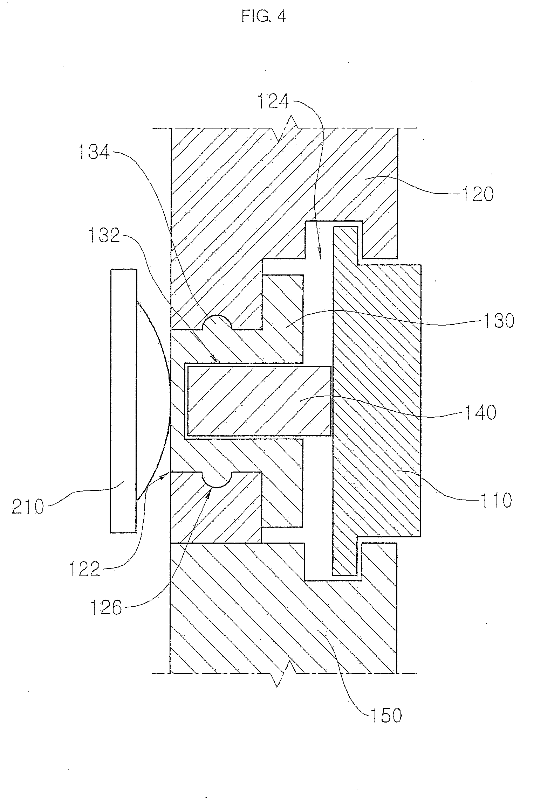

FIG. 4 is a cross-sectional view illustrating the water-proof structure according to an exemplary embodiment of the present invention.

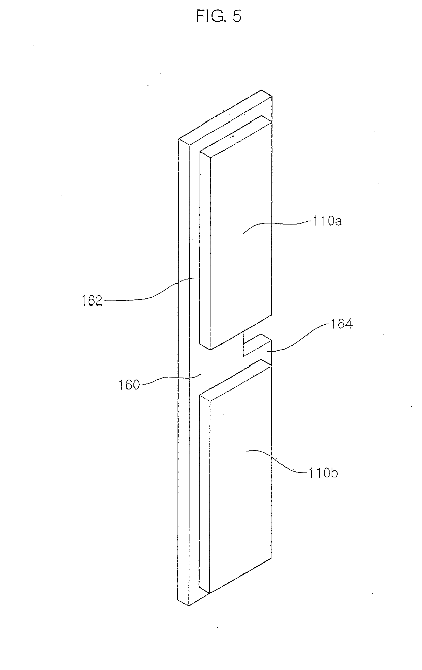

FIG. 5 is an enlarged perspective view illustrating a push key according to an exemplary embodiment of the present invention.

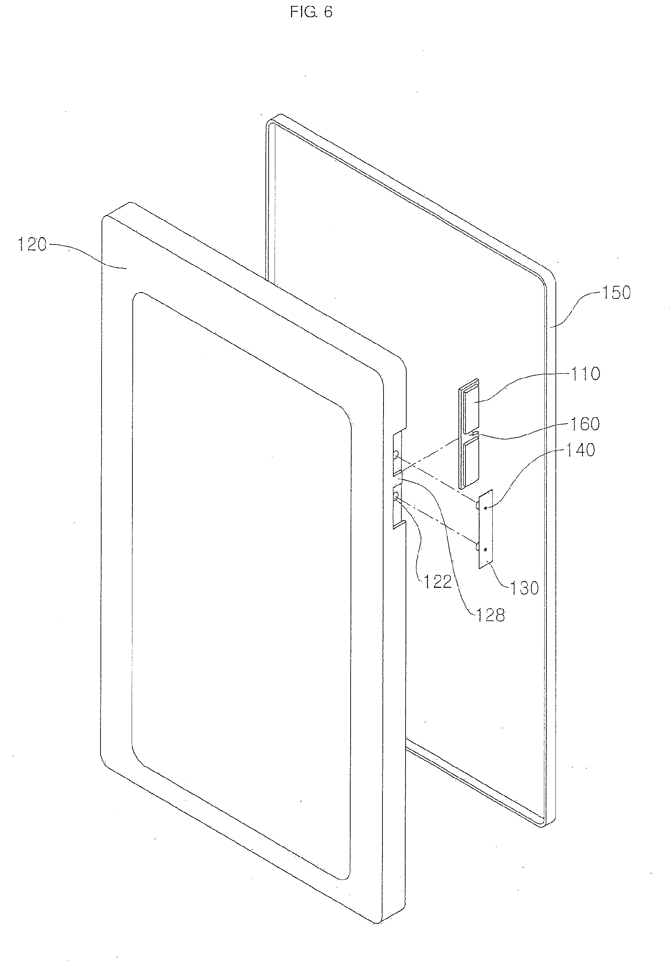

FIG. 6 is a diagram illustrating a method for assembling the water-proof structure according to an exemplary embodiment of the present invention.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION OF THE ILLUSTRATED EMBODIMENTS

Exemplary embodiments now will be described more fully hereinafter with reference to the accompanying drawings, in which exemplary embodiments are shown. The present disclosure may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art. In the description, details of well-known features and techniques may be omitted to avoid unnecessarily obscuring the presented embodiments.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms including technical and scientific terms used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

It will be understood that for the purposes of this disclosure, "at least one of X, Y, and Z" can be construed as X only, Y only, Z only, or any combination of two or more items X, Y, and Z (e.g., XYZ, XYY, YZ, ZZ).

In the drawings, like reference numerals denote like elements. The shape, size and regions, and the like, of the drawing may be exaggerated for clarity.

Hereinafter, the water-proofing structure according to exemplary embodiments of the disclosure will be described in more detail by referring to the accompanying drawings.

FIG. 3 is a perspective view illustrating a water-proof structure according to an exemplary embodiment of the present invention.

FIG. 4 is a cross-sectional view illustrating the water-proof structure according to an exemplary embodiment of the present invention.

Referring to FIG. 3 and FIG. 4, the water-proof structure of the disclosure includes a push key 110, a first case 120, an elastic body 130, a rod 140, and a second case 150.

The push key 110 may be pushed if a user inputs a signal, and if the push key 110 is pressed toward the inside of the first case 120, a force is transmitted to a push switch 210 through the rod 140 and the elastic body 130, hereby causing a signal to be detected.

The first case 120 has the push switch 210 disposed therein and includes a penetration hole 122 which is provided in the direction where a pressure is applied to the push switch 210, such as by an application of force, and a groove 124 which accommodates the push key 110.

The elastic body 130 is inserted into the penetration hole 122 of the first case 120, and includes a coupling hole 132 which is recessed inward. Since the elastic body 130 is inserted into the first case 120, various electronic components including the push switch 210 disposed inside the first case 120 may be protected from water. Unlike the related art, since a metal substance is not insert-molded on the top face of the elastic body 130, the manufacturing process may avoid the usage of metal substances and a body associated with the metal substance, and manufacturing costs may be reduced.

A protrusion 134 may be disposed on the outer peripheral surface of the elastic body 130, and a coupling groove 126, to which the protrusion 134 of the elastic body 130 is fitted, may be disposed at the intermediate area of the penetration hole 122. In the case of such a structure, since the elastic body 130 may be coupled to the first case 120, water-proofing may be achieved. Although not shown in the drawings, the bottom face of the elastic body 130 may be provided with a protrusion that faces the push switch 210.

The rod 140 is fitted to the coupling hole 132 of the elastic body 130, and transmits the pressure applied by the contact of the push key 110 to the push switch 210. Since the rod 140 is positioned and held while being fitted to the elastic body 130, and the rod 140 and the push key 110 are separated from each other, the rod 140 is not affected by the movement of the push key 110 unless a force is applied from the push key 110 toward the push switch 210. The push key and the rod may be formed of different materials. For example, the push key may be formed of a plastic material, and the rod may be formed of a polymer material.

The rod 140 may be, for example, a material with a lubricating element. In this case, it is possible to improve the click sensation if the user inputs a signal through the push key 110. Further, if the rod 140 is a material with a lubricating element, a compression amount may be increased by narrowing a gap between the rod 140 and the coupling hole 132 without degrading the click sensation of the user, which may aid in water-proofing.

FIG. 5 is an enlarged perspective view illustrating a push key according to an exemplary embodiment of the present invention.

Referring to FIG. 5, the push key 110 includes push key 110a and push key 110b which are connected to each other so as to be integrated through a connection member 160. In the drawing, two push keys 110 are shown, however, two or more push keys may be provided.

In addition, the connection member 160 includes a first flange 162 which extends toward the first case 120 and a second flange 164 which extends toward the second case 150.

Two flanges 162 and 164 may block a gap between the push key 110 and the cases 120 and 150 so as to be hidden from the outside thereof, and may prevent the push key 110 from being dislodged from the cases 120 and 150.

FIG. 6 is a diagram illustrating a method for assembling the water-proof structure according to an exemplary embodiment of the present invention.

Referring to FIG. 6, the elastic body 130 to which the rod 140 is fitted is coupled to the penetration hole 122 of the first case 120, and the push keys 110a and 110b are integrally formed with the connection member and may be coupled to the side face of the first case 120. Since the rod 140 and the push keys 110a and 110b are separated from each other, the respective components may be separately assembled.

A partition portion 128 may be formed in the side end of the first case 120 so as to define the area between the push key 110a and push key 110b.

The water-proof structure of the disclosure may reduce manufacturing costs and allow for a greater freedom in design.

In addition, the water-proof structure disclosed herein may provide a water-proofing performance with a simple structure without insert-molding a separate metal substance with the elastic body.

In addition, the water-proof structure disclosed herein may maintain a click sensation of the push key during operation.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A terminal, includes: a first button exposed on an exterior of the terminal; an elastic body comprising a coupling hole, the elastic body arranged in a case of the terminal; a rod fitted in the coupling hole, and the rod to be engaged by pressure asserted on the first button, wherein if force is asserted on the first button, the elastic body activates a push switch of the terminal. A method for providing water-proofing for a terminal, includes: providing a first button exposed on an exterior of the terminal; providing a non-metal insert comprising a coupling hole, the non-metal insert being fitted in a case of the terminal; and fitting a rod in the coupling hole, the rod being engaged by pressure asserted on the first button, wherein if force is asserted on the first button, the non-metal insert activates a push switch of the terminal.

## Claims

1. A terminal, comprising:
a first button exposed on an exterior of the terminal;
an elastic body comprising a coupling hole, the elastic body arranged in a case of the terminal;
a rod fitted in the coupling hole, and the rod to be engaged by pressure asserted on the first button,
wherein if force is asserted on the first button, the elastic body activates a push switch of the terminal.

2. The terminal according to claim 1, further comprising:
a protrusion formed integrally with the elastic body; and
a coupling groove in the case portion,
wherein the coupling groove and the protrusion are coupled together.

3. The terminal according to claim 1 or 2, further comprising:
a gap between the first button and the elastic body,
wherein the first button is slideable in the gap, and
a portion of the rod extrudes from the gap.

4. The terminal according to any of claims 1 to 3, wherein the rod comprises a lubricating element.

5. The terminal according to any of claims 1 to 4, wherein the first button is a plastic material, the rod preferably being made of a polymer material.

6. The terminal according to any of claims 1 to 5, further comprising a flange portion disposed between the case of the terminal and the first push button.

7. The terminal according to any of claims 1 to 6, further comprising a second button exposed on the exterior of the terminal, wherein, preferably, the elastic body associated with the first button and an elastic body associated with the second button are formed as a single element.

8. A elastic body inserted in a case of a terminal, comprising:
a coupling hole disposed in the elastic body;
a rod fitted in the coupling hole, and the rod to be engaged by pressure asserted on a first button,
wherein if force is asserted on the first button, the elastic body activates a push switch of the terminal.

9. The elastic body according to claim 8, further comprising:
a protrusion formed integrally with the elastic body,
wherein the protrusion has a shape to be coupled with a coupling groove in the case of the terminal.

10. The elastic body according to claim 8 or 9, further comprising:
a gap between the first button and the elastic body,
wherein the first button is slideable in the gap, and
a portion of the rod extrudes from the gap.

11. The elastic body according to any of claims 8 to 10, wherein the rod comprises a lubricating element.

12. The elastic body according to any of claims 8 to 11, wherein the rod is made of a polymer material.

13. The elastic body according to any of claims 8 to 12, wherein the elastic body engages a second button, the elastic body preferably having a structure configured to engage the first button and the second button.

14. A method for providing water-proofing for a terminal, comprising:
providing a first button exposed on an exterior of the terminal;
providing a non-metal insert comprising a coupling hole, the non-metal insert being fitted in a case of the terminal; and
fitting a rod in the coupling hole, the rod being engaged by pressure asserted on the first button,
wherein if force is asserted on the first button, the non-metal insert activates a push switch of the terminal.

15. The method according to claim 14, wherein the non-metal insert is an elastic body.

16. The method according to claim 14 or 15, further comprising:
providing a protrusion integral with the non-metal insert; and
a coupling groove in the case portion,
wherein the coupling groove and the protrusion are fitted to be coupled together,
wherein, preferably, the elastic body has a structure configured to engage the first button and a second button.
